# EUROPÄISCHE PATENTSCHRIFT

(11) **EP 2 602 051 B1**
(45) Veröffentlichungstag und Bekanntmachung des Hinweises auf die Patenterteilung: **20.01.2021**
(21) Anmeldenummer: 12189367.1
(22) Anmeldetag: 22.10.2012
(51) Int. Cl.: B23P 19/00, B23P 19/06, B21J 15/32, B21J 15/02, B21J 15/10

(54) **Übergabevorrichtung zur Übergabe von Einpresselementen in oder an einem Blechbearbeitungswerkzeug, sowie Blechbearbeitungswerkzeug mit einer solchen Übergabevorrichtung**
Transfer device for transferring press-in elements in or on a sheet metal processing tool, and sheet processing tool with such a transfer device
Dispositif de transfert destiné à transférer des éléments de compression dans ou sur un outil de traitement de tôle, ainsi qu'outil de traitement de tôle équipé d'un tel dispositif de transfert

(30) Priorität: 08.12.2011 DE 102011087944
(43) Veröffentlichungstag der Anmeldung: 12.06.2013
(73) Patentinhaber: Bayerische Motoren Werke Aktiengesellschaft, 80809 München (DE)
(72) Erfinder: Meller, Erhard, 84152 Mengkofen (DE); Hamberger, Stephan, 84326 Rimbach (DE)

(56) Entgegenhaltungen:
- WO-A1-95/11770
- WO-A1-99/61197

## Beschreibung

Die Erfindung betrifft eine Übergabevorrichtung, gemäß der im Oberbegriff des Anspruchs 1 gemäß dem Oberbegriff des Anspruchs 1. Eine solche Vorrichtung ist aus WO 99/61197 A bekannt.

Die Erfindung betrifft ferner ein Blechbearbeitungswerkzeug, das wenigstens eine solche Übergabevorrichtung aufweist.

Es ist bekannt Befestigungselemente durch Einpressen an einem Blechmaterial zu befestigen, wozu diese Befestigungselemente mit einem dafür vorgesehenen Fügeabschnitt, der mit dem Blechmaterial verpresst wird, ausgebildet sind. Derartige Befestigungselemente werden nachfolgend als Einpresselemente bezeichnet. Das Einpressen solcher Einpresselemente kann in pressengebundenen Blechbearbeitungswerkzeugen erfolgen, wozu diese wenigstens einen so genannten Stanzkopf bzw. Setzkopf aufweisen, der bei gängigen Blechbearbeitungswerkzeugen entsprechend der Einpressrichtung im Werkzeugoberteil oder im Werkzeugunterteil angeordnet ist.

Aus dem Stand der Technik sind Zuführsysteme bekannt, mit denen die Einpresselemente einem Stanzkopf oder gegebenenfalls auch mehreren Stanzköpfen in einem Blechbearbeitungswerkzeug zugeführt werden können. Ein solches Zuführsystem ist bspw. in der DE 103 90 182 B4 beschrieben. Das aus dieser Patentschrift vorbekannte Zuführsystem sieht eine Zuführung der Einpresselemente zum Werkzeugoberteil vor. Eine solche Zuführung zum Werkzeugoberteil ist jedoch problematisch. Zum einen können die Zuführschläuche mit Greifereinrichtungen an der Presse kollidieren. Zum anderen bestehen Beschränkungen hinsichtlich der Arbeitsgeschwindigkeit der Presse. So ist bspw. bei schnelllaufenden Pressen eine derartige Zuführung der Einpresselemente zum bewegten Werkzeugoberteil nicht mehr störungsfrei möglich.

In der DE 198 23 040 A1 wird zur Behebung dieser Probleme eine Übergabevorrichtung vorgeschlagen, mit der die einzupressenden Befestigungselemente bei jedem Zusammenfahren des Blechbearbeitungswerkzeugs vom unteren Werkzeugteil an das obere Werkzeugteil übergeben werden. Die aus der DE 198 23 040 A1 vorbekannte Übergabevorrichtung ist jedoch für die schiebende Förderung von Einpresselementen konzipiert und unterliegt somit diversen Nachteilen, die mit einer solchen schiebenden Förderung einhergehen. Obwohl in der DE 198 23 040 A1 auch eine Schusstechnik bzw. eine schießende Förderung von Einpresselementen erwähnt ist, bleibt offen, wie mit einer Übergabevorrichtung eine solche schießende Förderung gelingen kann.

Es ist daher eine Aufgabe der vorliegenden Erfindung eine Übergabevorrichtung der eingangs genannten Art anzugeben, mit der Einpresselemente im laufenden Pressenbetrieb mittels Schusstechnik übergeben werden können.

Diese Aufgabe wird gelöst von einer erfindungsgemäßen Übergabevorrichtung mit den Merkmalen des Anspruchs 1. Bevorzugte Ausführungsformen, Weiterbildungen und Ausgestaltungen der erfindungsgemäßen Übergabevorrichtung ergeben sich sowohl aus den abhängigen Ansprüchen als auch aus den nachfolgenden Erläuterungen. Im Rahmen der Erfindung können die Merkmale der Ausführungsformen auch miteinander kombiniert werden.

Mit dem nebengeordneten Anspruch erstreckt sich die Lösung der Aufgabe auch auf ein Blechbearbeitungswerkzeug, das wenigstens eine Übergabevorrichtung, gemäß dem Anspruch 1, umfasst. Die vorausgehenden und auch nachfolgenden Erläuterungen gelten analog für beide Erfindungsgegenstände.

Die erfindungsgemäße Übergabevorrichtung umfasst eine (erste) untere Kupplungseinrichtung, die an einem Werkzeugunterteil gehalten bzw. zu befestigen ist, und eine (zweite) obere Kupplungseinrichtung, die an einem Werkzeugoberteil gehalten bzw. zu befestigen ist. Alternativ kann die untere Kupplungseinrichtung auch an einem Presstisch, Pressenrahmen oder dergleichen befestigt sein und/oder die obere Kupplungseinrichtung kann an einem Pressenstößel befestigt sein. D. h. die erfindungsgemäße Übergabevorrichtung muss nicht zwangsläufig an einem Blechbearbeitungswerkzeug befestigt sein. Die beiden Kupplungseinrichtungen sind als korrespondierendes Kupplungspaar ausgebildet und können beim pressentaktgebundenen Schließen bzw. Zusammenfahren des Blechbearbeitungswerkzeugs ineinandergreifen, wobei beim Ineinandergreifen und solange der Eingriff besteht die Übergabe wenigstens eines Einpresselements zwischen den Werkzeugteilen und insbesondere vom Werkzeugunterteil zum Werkzeugoberteil ermöglicht wird.

Ferner ist vorgesehen, dass die korrespondierenden Kupplungseinrichtungen beim Ineinandergreifen einen durchgängigen und barrierefreien Übergabekanal bzw. Durchlass ausbilden, durch den hindurch wenigstens ein zu übergebendes Einpresselement durchgeschossen und auf diese Weise übergeben werden kann. Die erfindungsgemäße Vorrichtung kann mehrere korrespondierende Kupplungseinrichtungen bzw. Kupplungspaare aufweisen.

Der mit den Kupplungseinrichtungen temporär geschaffene Übergabekanal wird aus einem sich in der unteren Kupplungseinrichtung erstreckenden bzw. durch diese hindurch erstreckenden Kanalabschnitt und aus einem sich in der oberen Kupplungseinrichtung erstreckenden bzw. durch diese hindurch erstreckenden Kanalabschnitt gebildet bzw. geschaffen. Die jeweiligen Kanalabschnitte bilden beim Ineinandergreifen der beiden Kupplungseinrichtungen einen gemeinsamen durchgängigen und barrierefreien Übergabekanal aus. Bevorzugt ist vorgesehen, dass der beim Ineinandergreifen der Kupplungseinrichtungen gebildete Übergabekanal in Umfangsrichtung geschlossen ist.

Der mit den Kupplungseinrichtungen geschaffene Übergabekanal besteht so lange, wie sich die korrespondierenden Kupplungseinrichtungen im Eingriff befinden. Je nach Übergaberichtung fungiert eine der Kupplungseinrichtungen als übergebende Kupplungseinrichtung während die andere Kupplungseinrichtung als aufnehmende bzw. übernehmende Kupplungseinrichtung fungiert. Bevorzug ist vorgesehen, dass die übergebende Kupplungseinrichtung am Werkzeugunterteil angeordnet ist und dass die aufnehmende bzw. übernehmende Kupplungseinrichtung am Werkzeugoberteil angeordnet ist. In diesem bevorzugten Fall erfolgt die Übergabe des Einpresselements von unten nach oben bzw. vom Werkzeugunterteil zum Werkzeugoberteil. Falls erforderlich könnte die Übergabe aber auch von oben nach unten erfolgen.

Eine schießende Förderung ist als solche aus dem Stand der Technik bekannt, wozu z. B. auf die bereits eingangs genannten Patentschriften DE 103 90 182 B4 und DE 198 23 040 A1 verwiesen wird. Bei der Erfindung wird die schießende Förderung jedoch auch zur Übergabe des Einpresselements mittels Übergabevorrichtung genutzt bzw. nutzbar gemacht. Indem durch die ineinandergreifenden bzw. im Eingriff befindlichen Kupplungseinrichtungen der erfindungsgemäßen Übergabevorrichtung ein durchgängiger und barrierefreier Übergabekanal geschaffen wird kann die ohnehin vorhandene kinetische Energie des geschossenen Einpresselements auch für die Übergabe (bzw. für den Durchgang durch den geschaffenen Übergabekanal) genutzt werden. Die Schussbewegung (und die damit einhergehende kinetische Energie) wird in der Regel von einem nicht zur Erfindung gehörenden Sortier- und Zuführgerät mit einer Schussvorrichtung, wobei es sich bspw. um eine pneumatische Schussvorrichtung handelt, erzeugt.

Bevorzugt ist vorgesehen, dass es sich bei den zu übergebenden Einpresselementen um Bolzenelemente handelt. Bolzenelemente zeichnen sich im Wesentlichen dadurch aus, dass diese wenigstens einen Außenbefestigungsabschnitt wie insbesondere einen Außengewindeabschnitt aufweisen. Ferner ist bevorzugt vorgesehen, dass diese Bolzenelemente eine axiale Längserstreckung aufweisen, die insbesondere einem Mehrfachen des Durchmessers entspricht. Besonders bevorzugt ist vorgesehen, dass diese Bolzenelemente einen Kopf bzw. Kopfabschnitt aufweisen, der auch als Fügeabschnitt dienen kann. Bei den Bolzenelementen kann es sich z. B. um Gewindestanzbolzen, Rändelbolzen, Einpressgewindebolzen, Kugelstanzbolzen, T-Nut-Bolzen, Nietbolzen (bspw. Gewindenietbolzen), Massebolzen und dergleichen mehr handeln.

Der Übergabekanal der erfindungsgemäßen Übergabevorrichtung weist eine vertikale Orientierung auf. Die Übergabe der Einpresselemente erfolgt damit in vertikaler Richtung und bevorzugt von unten nach oben.

Gemäß dem Anspruch 1 ist vorgesehen, dass die untere Kupplungseinrichtung (wenigstens) ein Rohrelement bzw. einen Rohrstutzen oder dergleichen aufweist und dass die obere Kupplungseinrichtung (wenigstens) ein Hülsenelement oder dergleichen aufweist, wobei das Rohrelement und das Hülsenelement als korrespondierende Elemente derart ausgebildet und angeordnet sind, dass das Rohrelement beim Schließen des Blechbearbeitungswerkzeugs berührungslos in das Hülsenelement eintauchen bzw. eingleiten kann. Hierbei arbeitet die Übergabevorrichtung weitgehend verschleißfrei. Bei dem Hülsenelement handelt es sich bevorzugt auch um ein Rohrelement, welches entsprechend dimensioniert ist. Die Anordnung von Rohrelement und Hülsenelement kann, unbeachtlich der Übergaberichtung, auch vertauscht sein, d. h. das Rohrelement kann am Werkzeugoberteil und das Hülsenelement am Werkzeugunterteil angeordnet sein.

Die erfindungsgemäße Übergabevorrichtung kann wenigstens einen Detektor aufweisen, mit dem das Ineinandergreifen der Kupplungseinrichtungen beim Schließen des Blechbearbeitungswerkzeugs erfasst werden kann. Hierüber kann z. B. der Abschuss wenigstens eines zu übergebenden Einpresselements am Sortier- und Zuführgerät ausgelöst werden. Bei dem Detektor kann es sich z. B. um einen Kontaktschalter oder Näherungsschalter handeln. Je nach Ausgestaltung des Detektors kann das Ineinandergreifen der Kupplungseinrichtungen detektiert werden, bevor sich die Kupplungseinrichtungen im Eingriff befinden, so dass bspw. der Abschuss eines zu übergebenden Einpresselements zeitlich vorauseilend ausgelöst werden kann. Als Sicherungsmaßnahme können auch mehrere solcher Detektoren vorgesehen sein, wobei der Abschuss erst dann ausgelöst bzw. freigegeben wird, wenn alle Detektoren das Ineinandergreifen der Kupplungseinrichtungen beim Schließen des Blechbearbeitungswerkzeugs erfasst haben.

Ferner ist bevorzugt vorgesehen, dass eine Kupplungseinrichtung der erfindungsgemäßen Übergabevorrichtung (wenigstens) eine mechanisch wirksame Schusssicherung aufweist, mit der ein falsch abgeschossenes Einpresselement zurückgehalten bzw. aufgehalten werden kann. Bevorzugt ist diese Schusssicherung an der übergebenden Kupplungseinrichtung und insbesondere an der unteren Kupplungseinrichtung angeordnet. Die Schusssicherung kann durch einen federnd vorgespannten Schwenkhebel oder dergleichen gebildet sein, der die Austrittsöffnung der betreffenden Kupplungseinrichtung automatisch blockiert, sofern sich die Kupplungseinrichtungen nicht im Eingriff befinden (d. h. bei geöffneter Übergabevorrichtung) und der dieselbe Austrittsöffnung beim Ineinandergreifen der Kupplungseinrichtungen (d. h. bei geschlossener Übergabevorrichtung) automatisch freigibt. Das automatische Freigeben erfolgt bevorzugt dadurch, dass der Schwenkhebel beim Ineinandergreifen der Kupplungseinrichtungen von der korrespondierenden Kupplungseinrichtung direkt oder indirekt weggedrückt wird.

Mit dem nebengeordneten Anspruch erstreckt sich die Lösung der Aufgabe auch auf ein (pressengebundenes) Blechbearbeitungswerkzeug, mit einem Werkzeugunterteil bzw. Unterwerkzeug und mit einem Werkzeugoberteil bzw. Oberwerkzeug, wobei im Werkzeugoberteil wenigstens ein Stanzkopf zum Einpressen von Bolzenelementen angeordnet ist und wobei dieses Blechbearbeitungswerkzeug wenigstens eine Übergaberrichtung, gemäß dem Anspruch 1, aufweist, mit der die mit dem Stanzkopf einzupressenden Einpresselemente (insbesondere vom Werkzeugunterteil) an das Werkzeugoberteil übergeben werden können. Nach der Übergabe werden die übergebenen und nachfolgend einzupressenden Einpresselemente im Werkzeugoberteil zum Stanzkopf weitergeführt und dort für das nachfolgende Einpressen entsprechend positioniert.

Das Blechbearbeitungswerkzeug kann eine erfindungsgemäße Übergabevorrichtung aufweisen, über die die einzupressenden Einpresselemente direkt einem Stanzkopf oder unter Zwischenschaltung einer Verteileinrichtung auch mehreren Stanzköpfen zugeführt werden. Das Blechbearbeitungswerkzeug kann aber auch mehrere erfindungsgemäße Übergabevorrichtungen aufweisen, die identisch oder unterschiedlich ausgebildet sein können. Die Kupplungseinrichtungen einer Übergabevorrichtung und/oder die ineinandergreifenden Kupplungselemente der Kupplungseinrichtungen können starr am Blechbearbeitungswerkzeug angeordnet oder nachgiebig bzw. schwimmend gelagert sein.

Bevorzugt ist vorgesehen, dass eine der Kupplungseinrichtungen der Übergabevorrichtung an einem relativbeweglichen Niederhalter und insbesondere außen an einem Niederhalter des Blechbearbeitungswerkzeugs angeordnet bzw. befestigt ist und dadurch der Niederhalterbewegung folgt. Insbesondere handelt es sich hierbei um die obere Kupplungseinrichtung, die an einem zum Werkzeugoberteil gehörenden Niederhalter angeordnet ist. Die Anordnung an einem Niederhalter ermöglicht z. B. ein frühes Ineinandergreifen der Kupplungseinrichtungen während der Schließbewegung des Blechbearbeitungswerkzeugs und ermöglicht ferner durch Ausnutzen der relativen Niederhalterbewegung ein zeitlich längeres Ineinandergreifen der Kupplungseinrichtungen.

An dieser Stelle soll nochmals darauf hingewiesen werden, dass die erfindungsgemäße Übergabevorrichtung auch losgelöst von einem Blechbearbeitungswerkzeug betrieben werden kann, in dem z. B. die Kupplungseinrichtungen direkt an der Presse angeordnet bzw. befestigt werden.

Die Erfindung wird nachfolgend anhand der Figuren beispielhaft und in nicht einschränkender Weise näher erläutert.
- Fig. 1: zeigt in einer schematischen Seiten-/Schnittansicht zwei Ausführungsbeispiele für eine erfindungsgemäße Übergabevorrichtung.
- Fig. 2: zeigt jeweils in einer schematischen Seiten-/Schnittansicht mehrere Phasen bei der Übergabe eines Bolzenelements mit einer der Übergabevorrichtungen (nämlich mit der rechtsseitig dargestellten) aus Fig. 1.

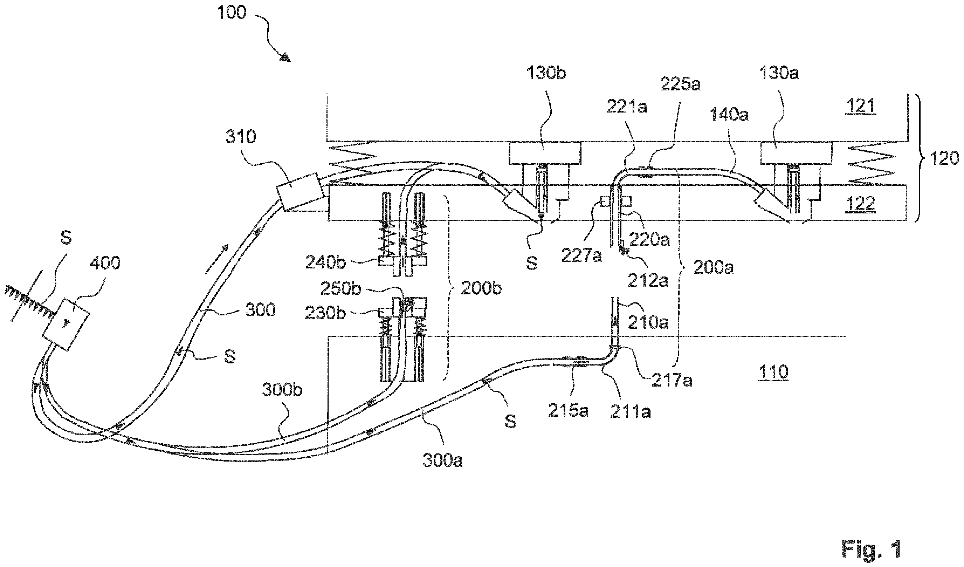

Fig. 1 zeigt ein Blechbearbeitungswerkzeug 100, das ein Werkzeugunterteil 110 und ein Werkzeugoberteil 120 umfasst. Das Werkzeugoberteil 120 weist einen zum Werkzeugoberteil gehörenden Niederhalter 122 auf, der zu einem Werkzeuggrundkörper 121 des Werkzeugoberteils 120 eine Relativbewegung ausführen kann. Das Blechbearbeitungswerkzeug 100 ist in einer nicht dargestellten Presse eingebaut. Im Werkzeugoberteil 120 sind zwei Stanzköpfe bzw. Setzköpfe 130a und 130b angeordnet, mit denen beim Schließen bzw. Zusammenfahren des Blechbearbeitungswerkzeugs 100 ein bolzenförmiges Einpresselement bzw. Bolzenelement S in ein zwischen den Werkzeugteilen 110 und 120 befindliches Blechmaterial eingepresst (bzw. eingestanzt oder eingenietet) werden kann.

Mit 300 ist ein konventioneller Zuführschlauch bzw. Schussschlauch (oder auch Schussleitung) bezeichnet, durch den die einzupressenden Bolzenelemente S typischerweise einzeln einem Stanzkopf (hier beispielhaft dem linken Stanzkopf 130b) zugeführt werden können. Mit 310 ist eine lösbare Verbindungskupplung bezeichnet. Diese Zuführung sieht eine schießende Förderung der einzupressenden Bolzenelemente S vor, wie in der DE 103 90 182 B4 beschrieben. Mit 400 ist ein Sortier- und Zuführgerät bezeichnet, dass ein Magazin oder dergleichen für die Bolzenelemente S sowie auch eine Schussvorrichtung aufweist.

Das konventionelle Zuführen der einzupressenden Bolzenelemente S direkt in das Werkzeugoberteil 120 ist problematisch, wie eingangs erläutert. Die Erfindung sieht daher eine Übergabevorrichtung 200a oder 200b vor, mit der die einzupressenden Bolzenelemente S während der Hubbewegung der Presse bzw. des Pressenstößels im oder außen am Blechbearbeitungswerkzeug 100 vom Werkzeugunterteil 110 an das Werkzeugoberteil 120 übergeben werden können. Damit müssen die einzupressenden Bolzenelemente S nur zum Werkzeugunterteil 110 zugeführt werden, was weitgehend unproblematisch ist.

Nachfolgend wird zunächst das rechts dargestellte erste Ausführungsbeispiel 200a einer solchen Übergabevorrichtung erläutert. Im Weiteren wird dann das links dargestellte zweite Ausführungsbeispiel 200b einer solchen Übergabevorrichtung erläutert. Zur leichteren Unterscheidung der Ausführungsbeispiele sind den Bezugszeichen die Buchstaben a und b angehängt. Die Merkmale der Ausführungsbeispiele können auch miteinander kombiniert werden.

Die Übergabevorrichtung 200a umfasst eine als Rohrelement 210a ausgebildete untere Kupplungseinrichtung und eine als Hülsenelement 220a ausgebildete obere Kupplungseinrichtung. Das Rohrelement 210a ist am Werkzeugunterteil 110 angeordnet. Das Hülsenelement 220a, das ebenfalls auch aus einem Rohr gebildet sein kann, ist am Niederhalter 122 des Werkzeugoberteils 120 angeordnet. Bevorzugt sind das Rohrelement 210a und das Hülsenelement 220a von außen an den Werkzeugteilen befestigt (bspw. angeschraubt). Mit 217a und 227a sind Befestigungsmittel bezeichnet, mit denen die Kupplungseinrichtungen am Werkzeugunterteil 110 und am Werkzeugoberteil 120 befestigt und insbesondere lösbar befestigt sind.

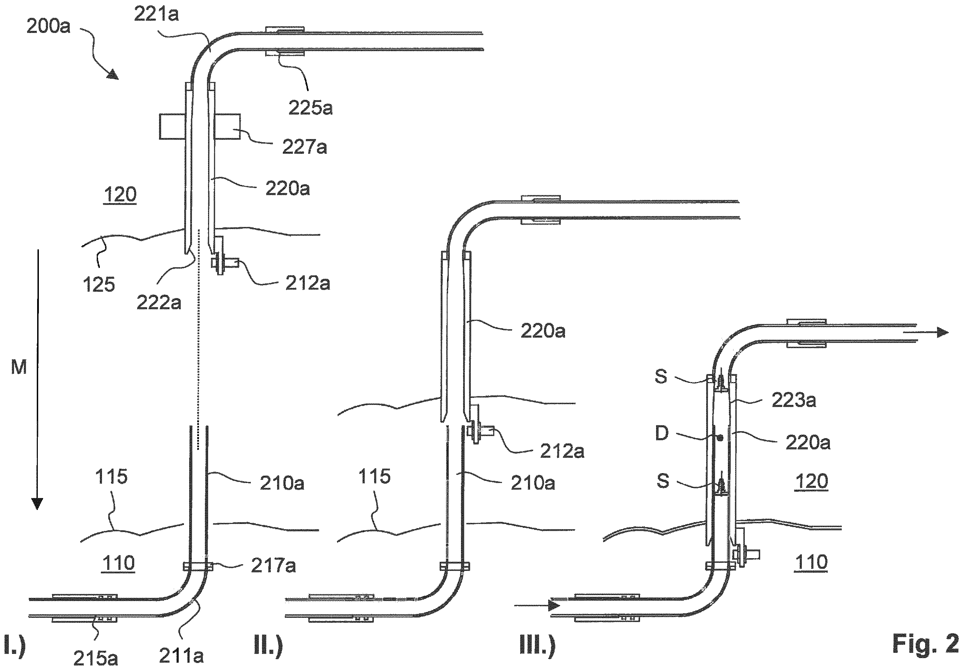

Sowohl das Rohrelement 210a als auch das Hülsenelement 220a sind bezüglich ihrer Längsachse vertikal ausgerichtet und zueinander fluchtend positioniert (siehe auch Teildarstellung I in Fig. 2). Das Rohrelement 210a geht über ein Bogenstück 211a in eine horizontale Ausrichtung über. Auch das Hülsenelement 220a geht über ein Bogenstück 221a in eine horizontale Ausrichtung über. Die Zuführung der zu übergebenden Bolzenelemente S zur unteren Kupplungseinrichtung erfolgt über einen Schussschlauch 300a (oder dergleichen), der mittels einer Schnellkupplung 215a mit dem Rohrelement 210a bzw. mit dem horizontalen Schenkel des Bogenstücks 211a verbunden ist.

Im Werkzeugoberteil 120 erfolgt die Weiterleitung der in der Übergabevorrichtung 200a übergebenen Bolzenelemente S zum Stanzkopf 130a über einen flexiblen Schlauch 140a, der über eine Schnellkupplung 225a mit dem Hülsenelement 220a bzw. mit dem horizontalen Schenkel des Bogenstücks 221a verbunden ist. Anstelle eines solchen Schlauchs 140a kann auch ein Rohrstück, ein Kanal oder dergleichen vorgesehen sein. Anstelle der gezeigten direkten Zuführung der übergebenen Bolzenelemente S zum Stanzkopf 130a ist auch eine indirekte Zuführung möglich, bspw. über eine Verteileinrichtung (Verteilstation), wie in der DE 198 23 040 A1 beschrieben.

Ist im Blechbearbeitungswerkzeug 100 genügend Freiraum vorhanden, so kann gegebenenfalls auf die Bogenstücke bzw. Rohrbogen 211a und/oder 221a verzichtet werden. Der Zuführschlauch 300a und/oder der Weiterführschlauch 140a kann dann direkt an einem geraden Rohrelement 210a bzw. einem geraden Hülsenelement 220a angekuppelt werden.

Die Übergabevorrichtung 200a ist im und bevorzugt außen am Blechbearbeitungswerkzeug 100 angeordnet, so dass die Übergabe direkt im Blechbearbeitungswerkzeug 100 bzw. außen am Blechbearbeitungswerkzeug 100 erfolgen kann. Die untere Kupplungseinrichtung kann alternativ auch am Pressentisch oder Pressrahmen befestigt sein. Die obere Kupplungseinrichtung kann alternativ auch am Pressenstößel befestigt sein. Ebenso ist auch eine umgekehrte Anordnung der Kupplungseinrichtungen möglich (d. h. Rohrelement oben und Hülsenelement unten), wobei jedoch die dargestellte Anordnung bevorzugt ist. Mit 212a ist ein beispielhaft am Hülsenelement 220a befestigter Detektor in Form eines Näherungsschalters (oder dergleichen) bezeichnet, mit der die Schussvorrichtung des Sortier- und Zuführgeräts 400 ausgelöst werden kann, wie nachfolgend noch näher erläutert.

Das Übergeben eines einzupressenden Bolzenelements S an bzw. in der Übergabevorrichtung 200a vollzieht sich in mehreren Phasen, was nachfolgend anhand der drei Einzeldarstellungen I, II und III in Fig. 2 näher erläutert wird. (Hinweis: In der Fig. 2 ist der Niederhalter 122 nicht dargestellt.)

Die Darstellung I in Fig. 2 zeigt das Blechbearbeitungswerkzeug 100 in einem geöffneten Zustand. Das Werkzeugoberteil 120 befindet sich in einer Abwärtsbewegung M zwischen seinem oberen Bewegungsendpunkt (OT) und seinem unteren Bewegungsendpunkt (UT). Mit 115 ist eine zum Werkzeugunterteil 110 gehörende Werkzeugwirkfläche bezeichnet. Mit 125 ist eine zum Werkzeugoberteil 120 gehörende Werkzeugwirkfläche bezeichnet. Mit den Werkzeugwirkflächen 115 und 125 kann ein zwischen den Werkzeugteilen 110 und 120 befindliches Blechwerkstück geformt werden. Bei dem Blechbearbeitungswerkzeug 100 kann es sich aber ebenso auch um ein Schneidwerkzeug handeln.

Während der pressenseitig erzeugten Abwärtsbewegung M nähert sich das Hülsenelement 220a dem stutzenartig nach oben ragenden Rohrelement 210a an, wobei das Rohrelement 210a und das Hülsenelement 220a zueinander fluchtend ausgerichtet sind, was mit einer gepunkteten Linie veranschaulicht ist. Kurz vor dem Ineinandergreifen, wobei sich das Hülsenelement 220a über das Rohrelement 210a schiebt (bzw. das Rohrelement 210a in das Hülsenelement 220a eintaucht), wird über den Näherungsschalter 212a bereits der Abschuss eines Bolzenelements S in dem Sortier- und Zuführgerät 400 ausgelöst. Die Darstellung II zeigt diesen Auslösezeitpunkt. Alternativ kann der Abschuss eines Bolzenelements S auch über einen pressenseitig oder anderweitig montierten Kontaktschalter (oder dergleichen) ausgelöst werden, wobei der Näherungsschalter 212a dann z. B. als Sicherungsschalter dienen kann.

Die Darstellung III zeigt das Werkzeugoberteil 120 in der UT-Position. Das Hülsenelement 220a und das Rohrelement 210a befinden sich im Eingriff mit maximaler Überdeckung und bilden einen durchgängigen und barrierefreien Übergabekanal D aus, den das zuvor abgeschossene Bolzenelement S durchschießt und hierbei quasi vom Werkzeugunterteil 110 an das Werkzeugoberteil 120 übergeben wird. Das Rohrelement 210a und das Hülsenelement 220a (bei dem es sich ebenfalls um ein Rohrelement handeln kann) wirken hierbei in der Art eines teleskopierbaren Blasrohrs zusammen.

Der Übergabekanal D weist eine vertikale Orientierung auf. Die Übergabe des Bolzenelements S erfolgt in vertikaler Richtung von unten nach oben. Hierbei fungiert die untere Kupplungseinrichtung als übergebende Kupplungseinrichtung und das Rohrelement 210a fungiert als Übergaberohr. Die obere Kupplungseinrichtung fungiert als aufnehmende Kupplungseinrichtung und das Hülsenelement 220a fungiert als Übernahmerohr. (Bei einer Übergabe von oben nach unten, die mit der erfindungsgemäßen Übergabevorrichtung 200a ebenso möglich ist, wäre diese Zuordnung vertauscht.)

Der Übergabekanal D ist bezüglich seines Querschnitts größer und insbesondere geringfügig größer dimensioniert als das zu übergebende bzw. durch den Übergabekanal D durchzuführende Bolzenelement S. In anderen Worten ausgedrückt bedeutet dies, dass der Übergabekanal D an seiner dünnsten Stelle breiter ist als das Bolzenelement S an seiner dicksten Stelle. Insbesondere ist vorgesehen, dass der Innendurchmesser des Rohrelements 210a in etwa (d. h. zuzüglich einem geringen Aufmaß) dem Außendurchmesser des zu dem Stanzkopf 130a zu befördernden Bolzenelements S entspricht. Ein Anschlagen des Bolzenelements S an der Innenwandung wird durch ein sich aufbauendes Luftpolster, welches das bewegte Bolzenelement S umgibt, verhindert.

Ferner ist der Übergabekanal D bevorzugt ohne Kanten, Vorsprünge oder dergleichen ausgebildet. Etwaige Querschnittsübergänge sind mit einer Phase, Verrundung oder dergleichen ausgebildet, die auf das in der Übergabevorrichtung 200a zu übergebende Bolzenelement S eine zentrierende bzw. ausrichtende Wirkung haben können (siehe z. B. Bezugszeichen 223a, wie nachfolgend noch näher erläutert). Der Übergabekanal D weist bevorzugt einen an das Bolzenelement S angepassten Kreisquerschnitt auf, wobei dieser Kreisquerschnitt insbesondere an die Querschnittsdimension des zu übergebenden Bolzenelements S angepasst ist (oder umgekehrt).

Die Übergabe eines Bolzenelements S kann erfolgen, wenn sich das Werkzeugoberteil 120, wie in der Darstellung III gezeigt, in der UT-Position befindet. Die Übergabe des Bolzenelements S kann gegebenenfalls auch kurz vor Erreichen der gezeigten UT-Position oder aber auch kurz nach Erreichen der UT-Position (d. h. nach dem das Werkzeugoberteil 120 die gezeigte UT-Position bereits verlassen hat und sich wieder nach oben bewegt) erfolgen. Sollte das zu übergebende Bolzenelement S einen Kopfabschnitt aufweisen, so ist bevorzugt vorgesehen, dass die Schussbewegung mit rückwärtsgewandtem Kopfabschnitt (bzw. mit Gewinde voraus) erfolgt wie aus der Darstellung III ersichtlich.

Wie ferner aus den Darstellungen in Fig. 2 ersichtlich, weist die Innenausnehmung des Hülsenelements 220a im oberen Bereich (d. h. am oberen Ende des Rohrkörpers) einen durch eine Verengung, Fase oder Verrundung (oder dergleichen) gebildeten Übergangsbereich 223a auf. Bevorzugt ist diese Fase bzw. Verrundung 223a geometrisch auf das zu übergebende Bolzenelement S abgestimmt (oder umgekehrt) und kann z. B. in der Art eines Trichters die Ausrichtung des Bolzenelements S für den weiteren Verlauf durch das Rohrbogenstück 221a bewirken. Hierzu ist anzumerken, dass die Innenausnehmung des Hülsenelements 220a im unteren Bereich dafür ausgebildet ist, dass das Rohrelement 210a eingleiten bzw. eintauchen kann. Dadurch ist die Innenausnehmung im Hülsenelement 220a im unteren Bereich (Aufnahmebereich) mit größerem Querschnitt bzw. Durchmesser ausgebildet als im oberen Bereich (Übergangsbereich). Bevorzugt ist der Innendurchmesser bzw. die Innenkontur des Hülsenelements 220a in diesem Aufnahmebereich an den Außendurchmesser bzw. an die Außenkontur des Rohrelements 210a angepasst (und/oder umgekehrt), wobei ein geringes Spaltmaß vorgesehen ist, um ein berührungsfreies Ein- und Ausgleiten zu ermöglichen (wie nachfolgend noch näher erläutert).

Die Darstellung III zeigt dasselbe Bolzenelement S in verschiedenen Schusspositionen. Bevorzugt ist vorgesehen, dass bei jedem Eingriff von Rohrelement 210a und Hülsenelement 220a ein einzelnes Bolzenelement S übergeben wird. Anstatt eines einzelnen Bolzenelements S können bei einem pressentaktgebundenen Eingriff von Rohrelement 210a und Hülsenelement 220a auch mehrere Bolzenelemente S sequentiell übergeben werden, die dann bspw. einer Verteileinrichtung im Werkzeugoberteil 120 zugeführt werden.

Gegebenenfalls wird durch das Nachfördern von Blasluft insbesondere seitens des Sortier- und Zuführgeräts 400 die Vorwärtsbewegung des Bolzenelements S bis zum Zielort (dies kann der Stanzkopf 130a oder eine Verteileinrichtung sein) aufrecht erhalten. Hierfür ist es von Vorteil, wenn sich das Rohrelement 210a und das Hülsenelement 220a in Bezug auf die Stößelbewegung (bzw. in Bezug auf die Ab- und Aufwärtsbewegung des Werkzeugoberteils 120) zumindest so lange im Eingriff befinden, dass der Blasluftstrom nicht abreißen kann, bis das Bolzenelement S seinen Zielort erreicht hat. Dies kann bspw. durch die maximale Überdeckungslänge eingestellt werden. Durch die Anordnung des Hülsenelements 220a am Niederhalter 122 kann zudem trotz einer verhältnismäßig kurzen Ausführung des Hülsenelements 220a und/oder des Rohrelements 210a und einer damit prinzipiell einhergehenden kurzen maximalen Überdeckungslänge eine verhältnismäßig lange Überdeckungszeit erzielt werden. Gesonderte Dichtungen an der Übergabevorrichtung 200a sind nicht vorgesehen. Ferner ist ein in Umfangsrichtung geschlossener Übergabekanal D von Vorteil.

Bei der nachfolgenden Aufwärtsbewegung des Werkzeugoberteils 120 werden das Rohrelement 210a und das Hülsenelement 220a wieder getrennt. Das Rohrelement 210a und das Hülsenelement 220a sind bevorzugt derart aufeinander abgestimmt und angeordnet, dass ein berührungsloses Eingleiten und Ausgleiten ermöglicht ist. Dies kann durch ein Spielmaß im Bereich weniger Zehntel Millimeter zwischen dem Rohrelement 210a und dem Hülsenelement 220a erreicht werden. Das Hülsenelement 220a kann an seinem untenliegenden Öffnungsrand mit einer Anschrägung bzw. Fase 222a ausgebildet sein, was insbesondere beim Ausrichten im Einrichtbetrieb von Vorteil ist. Zur Kompensation und/oder Dämpfung von Schwingungen kann eine elastische Aufhängung des Rohrelements 210a und/oder des Hülsenelements 220a vorgesehen sein.

Die Übergabevorrichtung 200a weist einen sehr einfachen sowie äußerst robusten und störunanfälligen Aufbau auf. Besonders bevorzugt ist vorgesehen, dass die Übergabevorrichtung 200a im Wesentlichen aus zugekauften Halbzeugen, wie insbesondere aus Rohren, aufgebaut ist. Wegen des berührungslosen Ineinandergreifens können gängige Halbzeugmaterialien (bspw. Kunststoff, Stahl, Messing, etc.) verwendet werden. Eine besondere Behandlung der eingesetzten Halbzeugmaterialien (bspw. Härten, Oberflächenbeschichten etc.) ist in der Regel nicht erforderlich. Aufgrund der erläuterten Berührungslosigkeit arbeitet die Übergabevorrichtung 200a nahezu verschleißfrei. Auch eine Schmierung ist nicht erforderlich.

Nachfolgend wird das in Fig. 1 links dargestellte zweite Ausführungsbeispiel einer Übergabevorrichtung 200b erläutert, wobei nur auf die wesentlichen Unterschiede im Hinblick auf die zuvor erläuterte Übergabevorrichtung 200a eingegangen wird. Im Übrigen gelten analog die vorausgehenden Erläuterungen.

Die untere Kupplungseinrichtung weist ein federnd gelagertes unteres Mundstück 230b auf. Die obere Kupplungseinrichtung weist ein ebenfalls federnd gelagertes oberes Mundstück 240b auf. Beim Schließen des Blechbearbeitungswerkzeugs 100, was insbesondere durch Absenken des Werkzeugoberteils 120 erfolgt, können die beiden korrespondierenden Mundstücke 230b und 240b formschlüssig ineinandergreifen, wobei ein durchgängiger und barrierefreier Übergabekanal ausgebildet wird, durch den hindurch wenigstens ein zu übergebendes Bolzenelement S durchgeschossen werden kann, wie bereits erläutert.

Durch die federnde Lagerung der Mundstücke 230b und 240b können diese beim weiteren Zufahren des Werkzeugoberteils 120 (bis in die UT-Position) zurückweichen, wobei der Eingriff bzw. Formschluss zwischen den Mundstücken 230b und 240b durch Aufbringung einer definierten Kupplungskraft über einen längeren Zeitabschnitt aufrecht erhalten bleibt. Eine definierte Federbewegung der Mundstücke 230b und 240b kann z. B. durch eine Schlittenführung realisiert werden. Die in vertikaler Richtung wirksame federnde Lagerung ermöglicht ferner ein gedämpftes Aufsetzen der beiden Mundstücke 230b und 240b, was insbesondere bei hohen Hubzahlen und/oder bei hohen Stößelgeschwindigkeiten von Vorteil ist. Ergänzend kann auch eine in horizontaler Richtung wirksame federnde Lagerung vorgesehen sein (schwimmende Lagerung) durch die sich die Mundstücke 230b und 240b beim Ineinandergreifen zueinander ausrichten können. Eine solche schwimmende Lagerung kann auch bei der rechts dargestellten Übergabevorrichtung 200a vorgesehen sein.

Das untere Mundstück 230b verfügt über eine Schusssicherung, die bei geöffneter Übergabevorrichtung 200b (wie dargestellt) ein falsch abgeschossenes Bolzenelement S zurückhält. Ergänzend kann eine Fehlermeldung an die Steuerung ausgegeben werden.

In dem dargestellten Beispiel ist diese Schusssicherung durch einen federnd vorgespannten Kipphebel bzw. Schwenkhebel 250b realisiert. Befinden sich die Mundstücke 230b und 240b nicht im Eingriff (wie dargestellt) wird die oben befindliche Austrittsöffnung des unteren Mundstücks 230b durch den Schwenkhebel 250b blockiert (Schusskanalsperre). Beim Ineinandergreifen der beiden Mundstücke 230b und 240b wird der Schwenkhebel 250b am unteren Mundstück 230b durch das entsprechend ausgebildete obere Mundstück 230b weggedrückt bzw. weggeklappt (bspw. kann das obere Mundstück 230b einen hierzu vorgesehenen Dorn oder dergleichen aufweisen), wodurch die Austrittsöffnung bzw. der Übergabekanal frei gegeben ist bzw. freigegeben wird. Eine derartige Schusssicherung lässt sich auch auf andere Weise realisieren. Bspw. ist auch ein motorisch angetriebenes Stellelement denkbar. Im Übrigen kann auch die rechts dargestellte Übergabevorrichtung 200a eine solche Schusssicherung aufweisen.

Die vorausgehenden Erläuterungen im Zusammenhang mit den Fig. 1 und 2 beziehen sich auf ein zu übergebendes bolzenartiges Einpresselement bzw. Bolzenelement S.

### Bezugszeichenliste

### Übergabevorrichtung zur Übergabe von Einpresselementen in oder an einem Blechbearbeitungswerkzeug, sowie Blechbearbeitungswerkzeug mit einer solchen Übergabevorrichtung

- 100: Blechbearbeitungswerkzeug
- 110: Werkzeugunterteil
- 115: Werkzeugwirkfläche
- 120: Werkzeugoberteil
- 121: Werkzeuggrundkörper
- 122: Niederhalter
- 125: Werkzeugwirkfläche
- 130: Stanzkopf, Setzkopf
- 140: Schlauch (Weiterführschlauch)
- 200: Übergabevorrichtung
- 210: Rohrelement, Rohrstutzen
- 211: Bogenstück
- 212: Näherungsschalter (Detektor)
- 215: Kupplung
- 217: Befestigungsmittel
- 220: Hülsenelement
- 221: Bogenstück
- 222: Fase, Verrundung
- 223: Fase, Verrundung
- 225: Kupplung
- 227: Befestigungsmittel
- 230: unteres Mundstück
- 240: oberes Mundstück
- 250: Schwenkhebel, Sicherungshebel
- 300: Zuführschlauch, Schussschlauch
- 310: Kupplung
- 400: Sortier- und Zuführgerät
- D: Übergabekanal, Durchlass
- M: Bewegungsrichtung
- S: Bolzenelement (Einpresselement)

## Patentansprüche

1. Ubergabevorrichtung (200) zur Ubergabe von Einpresselementen (S) in oder an einem pressengebundenen Blechbearbeitungswerkzeug (100), mit einer an einem Werkzeugunterteil (110) gehaltenen unteren Kupplungseinrichtung und mit einer an einem Werkzeugoberteil (120) gehaltenen oberen Kupplungseinrichtung, wobei diese Kupplungseinrichtungen beim pressentaktgebundenen Schließen des Blechbearbeitungswerkzeugs (100) ineinandergreifen und hierbei die Übergabe wenigstens eines bolzenartigen Einpresselements (S) ermöglichen,
wobei die Kupplungseinrichtungen beim Ineinandergreifen einen durchgängigen und barrierefreien Übergabekanal (D) mit vertikaler Orientierung ausbilden, durch den hindurch wenigstens ein zu übergebendes Einpresselement (S) durchgeschossen werden kann,
**dadurch gekennzeichnet, dass**
zur Übergabe von bolzenartigen Einpresselementen,
die untere Kupplungseinrichtung ein Rohrelement (210a) und die obere Kupplungseinrichtung ein Hülsenelement (220a) aufweist, die derart ausgebildet und angeordnet sind, dass das Rohrelement (210a) beim Schließen des Blechbearbeitungswerkzeugs (100) berührungslos in das Hülsenelement (220a) eintauchen kann,
wobei die Innenausnehmung des Hülsenelements (220a) im unteren Bereich dafür ausgebildet ist, dass das Rohrelement (210a) eintauchen kann, und im oberen Bereich einen durch eine Verengung, Fase oder Verrundung gebildeten Übergangsbereich (223a), der auf das zu übergebende bolzenartige Einpresselement (S) eine zentrierende Wirkung hat, aufweist.

2. Übergabevorrichtung (200) nach Anspruch 1,
**dadurch gekennzeichnet, dass**
ein Detektor (212) vorgesehen ist, mit dem das Ineinandergreifen der Kupplungseinrichtungen erfasst werden kann.

3. Übergabevorrichtung (200) nach einem der vorausgehenden Ansprüche,
**dadurch gekennzeichnet, dass**
eine der Kupplungseinrichtungen eine mechanisch wirksame Schusssicherung aufweist, mit der ein falsch abgeschossenes bolzenartiges Einpresselement (S) aufgehalten werden kann.

4. Übergabevorrichtung (200) nach Anspruch 3,
**dadurch gekennzeichnet, dass**
die Schusssicherung einen federnd vorgespannten Schwenkhebel aufweist, der die Austrittsöffnung der Kupplungseinrichtung automatisch blockiert, sofern sich die Kupplungseinrichtungen nicht im Eingriff befinden, und der die Austrittsöffnung beim Ineinandergreifen der Kupplungseinrichtungen automatisch freigibt.

5. Blechbearbeitungswerkzeug (100), mit einem Werkzeugunterteil (110) und mit einem Werkzeugoberteil (120), wobei im Werkzeugoberteil (120) wenigstens ein Stanzkopf (130) zum Einpressen von bolzenartigen Einpresselementen (S) angeordnet ist,
**dadurch gekennzeichnet, dass**
dieses Blechbearbeitungswerkzeug (100) wenigstens eine Übergabevorrichtung (200) gemäß einem der vorausgehenden Ansprüche aufweist, mit der die mit dem Stanzkopf (130) einzupressenden bolzenartigen Einpresselemente (S) an das Werkzeugoberteil (120) übergeben werden können.

6. Blechbearbeitungswerkzeug (100) nach Anspruch 5,
**dadurch gekennzeichnet, dass**
eine Kupplungseinrichtung der Übergabevorrichtung (200) an einem Niederhalter (122) des Blechbearbeitungswerkzeugs (100) angeordnet ist.

## Claims

1. Transfer apparatus (200) for transferring press-in elements (S) in or on a press-bound sheet-metal processing tool (100), having a lower coupling device held on a lower tool part (110) and having an upper coupling device held on an upper tool part (120), wherein these coupling devices engage in one another during the press-cycle-bound closing of the sheet-metal processing tool (100) and in the process allow the transfer of at least one bolt-like press-in element (S),
wherein the coupling devices, while engaging with one another, form a continuous and barrier-free transfer channel (D) with a vertical orientation, through which at least one press-in element to be transferred (S) can be fired,
**characterized in that**,
in order to transfer bolt-like press-in elements, the lower coupling device (210a) has a tube element (210a) and the upper coupling device has a sleeve element (220a), which are configured and arranged such that the tube element (210a) can pass into the sleeve element (220a) without contact during the closing of the sheet-metal processing tool (100),
wherein the inner recess of the sleeve element (220a) is configured in the lower region such that the tube element (210a) can pass in, and in the upper region has a transition region (223a), formed by a narrowing, chamfer or rounded portion, that has a centring action on the bolt-like press-in element (S) to be transferred.

2. Transfer apparatus (200) according to Claim 1,
**characterized in that**
a detector (212) is provided, with which the engagement of the coupling devices with one another can be sensed.

3. Transfer apparatus (200) according to either of the preceding claims,
**characterized in that**
one of the coupling devices has a mechanically active safety lock with which an unintentionally fired bolt-like press-in element (S) can be stopped.

4. Transfer apparatus (200) according to Claim 3,
**characterized in that**
the safety lock has a pivot lever pretensioned by spring loading, which automatically blocks the outlet opening of the coupling device if the coupling devices are not engaged, and which automatically opens up the outlet opening when the coupling devices engage with one another.

5. Sheet-metal processing tool (100) having a lower tool part (110) and an upper tool part (120), wherein at least one punching head (130) for pressing in bolt-like press-in elements (S) is arranged in the upper tool part (120),
**characterized in that**
this sheet-metal processing tool (100) has at least one transfer apparatus (200) according to one of the preceding claims, with which the bolt-like press-in elements (S) to be pressed in by the punching head (130) can be transferred to the upper tool part (120) .

6. Sheet-metal processing tool (100) according to Claim 5,
**characterized in that**
a coupling device of the transfer apparatus (200) is arranged on a holding-down means (122) of the sheet-metal processing tool (100).

## Revendications

1. Dispositif de transfert (200) destiné à transférer des éléments de pressage (S) dans ou sur un outil de travail de tôle (100) lié à une presse, ledit dispositif comprenant un moyen d'accouplement inférieur maintenu sur une partie d'outil inférieure (110) et un moyen d'accouplement supérieur maintenu sur une partie d'outil supérieure (120), ces moyens d'accouplement s'engageant l'un dans l'autre lors de la fermeture de l'outil de travail de tôle (100) en raison du cycle de pressage et permettant le transfert au moins d'un élément de pressage (S) de type de boulon,
les moyens d'accouplement formant, lorsqu'ils s'engagent l'un dans l'autre, un canal de transfert (D) continu et sans obstacle, ayant une orientation verticale, à travers lequel au moins un élément de pressage (S) à transférer peut être passé,
**caractérisé en ce que**
pour transférer des éléments de pressage de type boulon,
le moyen d'accouplement inférieur comporte un élément tubulaire (210a) et le moyen d'accouplement supérieur comporte un élément formant manchon (220a), qui sont conçus et disposés de telle manière que l'élément tubulaire (210a) puisse pénétrer sans contact dans l'élément formant manchon (220a) lors de la fermeture de l'outil de travail de tôle (100),
l'évidement intérieur de l'élément formant manchon (220a) étant ménagé dans la région inférieure de sorte que l'élément tubulaire (210a) puisse pénétrer, et comportant dans la région supérieure une région de transition (223a), formée par un rétrécissement, un chanfrein ou un arrondi, qui a un effet de centrage sur l'élément de pressage (S) de type boulon.

2. Dispositif de transfert (200) selon la revendication 1,
**caractérisé en ce que**
un détecteur (212) est prévu qui peut détecter l'engagement des moyens d'accouplement l'un dans l'autre.

3. Dispositif de transfert (200) selon l'une des revendications précédentes,
**caractérisé en ce que**
l'un des moyens d'accouplement comporte un moyen de sécurité à action mécanique qui permet d'arrêter un élément de pressage (S) de type boulon qui a été déclenché par erreur.

4. Dispositif de transfert (200) selon la revendication 3,
**caractérisé en ce que**
le moyen de sécurité comporte un levier pivotant précontraint par ressort qui bloque automatiquement l'ouverture de sortie du moyen d'accouplement si les moyens d'accouplement ne sont pas en engagement et qui libère automatiquement l'ouverture de sortie lors de l'engagement des moyens d'accouplement l'un dans l'autre.

5. Outil de travail de tôle (100), comprenant une partie d'outil inférieure (110) et une partie d'outil supérieure (120), au moins une tête d'emboutissage (130) destinée à presser des éléments de pressage (S) de type boulon étant disposée dans la partie d'outil supérieure (120),
**caractérisé en ce que**
cet outil de travail de tôle (100) comporte au moins un dispositif de transfert (200) selon l'une des revendications précédentes qui permet de transférer des éléments de pressage (S) de type boulon à presser au moyen de la tête d'emboutissage (130) sur la partie d'outil supérieure (120).

6. Outil de travail de tôle (100) selon la revendication 5,
**caractérisé en ce que**
un moyen d'accouplement du dispositif de transfert (200) est disposé sur un dispositif de maintien (122) de l'outil de travail de tôle (100).
